# EUROPÄISCHE PATENTSCHRIFT

(11) **EP 1 451 535 B1**
(45) Veröffentlichungstag und Bekanntmachung des Hinweises auf die Patenterteilung: **21.10.2009**
(21) Anmeldenummer: 02781310.4
(22) Anmeldetag: 08.11.2002
(51) Int. Cl.: G01F 23/26

(54) **VERFAHREN ZUR KAPAZITIVEN FÜLLSTANDSMESSUNG**
METHOD FOR A CAPACITIVE LEVEL MEASUREMENT
PROCEDE DE MESURE CAPACITIVE D'UN NIVEAU

(30) Priorität: 27.11.2001 DE 10157762
(43) Veröffentlichungstag der Anmeldung: 01.09.2004
(73) Patentinhaber: Endress + Hauser GmbH + Co. KG, 79689 Maulburg (DE)
(72) Erfinder: FLORENZ, Hans-Jörg, D - 77654 Offenburg (DE)
(74) Vertreter: Andres, Angelika Maria
(86) Internationale Anmeldenummer: PCT/EP2002/012469
(87) Internationale Veröffentlichungsnummer: WO 2003/046490

(56) Entgegenhaltungen:
- EP-A- 0 338 400
- EP-A- 0 922 963
- US-A- 6 164 744

## Beschreibung

Die Erfindung betrifft ein Verfahren zur kapazitiven Füllstandsmessung.

Anordnungen zur kapazitiven Füllstandsmessung eines Füllguts in einem Behälter mit einer Messelektrode und einer Auswerteschaltung sind seit langem bekannt.

Hierbei wird die Kapazität zwischen der Messelektrode und dem normalerweise aus Metall bestehendem Behälter ausgewertet. Die Kapazität hängt im wesentlichen vom Füllhöhe des Füllguts im Behälter ab.

Sie wird in der Regel dadurch ermittelt, daß der Blindwiderstand der Messanordnung bestimmt wird. Hierzu wird eine Wechselspannung erzeugt und der zugehörige Wechselstrom bzw. dessen Amplitude gemessen. Zwischen der Amplitude der Wechselspannung und der Amplitude des Wechselstroms, die auch als Strombetrag bezeichnet wird, besteht ein einfacher Zusammenhang aus der Blindwiderstand und damit über die Frequenz die Kapazität berechnet wird.

Störend bei derartigen Messverfahren ist, daß der Strombetrag nicht nur vom kapazitiven Blindwiderstand, sondern auch vom ohmschen Widerstand der Messanordnung, abhängt.
Dies wirkt sich auf die Genauigkeit und auf die Zuverlässigkeit des Messergebnises aus.

Der ohmsche Widerstand der Messanordnung kann verschieden Ursachen haben.
Zum einen kann sich auf der Messelektrode ein leitfähiger Belag bilden, über den eine Verbindung zum metallischen Behälter hergestellt wird.
Zum anderen kann sich Feuchtigkeit im Füllgut ansammeln und dadurch die Leitfähigkeit des Füllguts erhöhen.

Es sind verschieden Möglichkeiten bekannt, den Einfluß des ohmschen Widerstand auf das Messergebnis zu unterdrücken.

Bei einem bekannten Verfahren wird der Ohmsche Widerstand der Messanordnung direkt gemessen und bei der Auswertung des Strombetrags berücksichtigt. Hierfür ist eine spezielle Messschaltung und eine aufwendige Auswertung notwendig.

Bei einem weiteren Verfahren erfolgt eine phasenselektive Messung des Strombetrags. Dadurch werden Anteile im Strombetrag, die vom ohmschen Widerstand herrühren, minimiert. Eine phasenselektive Messschaltung ist sehr aufwendig und sehr empfindlich auf Temperaturschwankungen insbesondere der Meschaltung. Diese Temperaturschwankungen müssen, wenn ein zuverlässiges Messergebnis gewünscht wird, berücksichtigt werden.
Weiterhin wirken sich elektromagnetische Einstrahlungen (EMV) sowie Driften der einzelnen Bauelemente der Messschaltung negativ auf das Messergebnis aus. Solche Einflüsse auf das Messergebnis lassen sich nur aufwendig berücksichtigen.

Aufgabe der vorliegenden Erfindung ist es, ein Verfahren zur kapazitiven Füllstandsmessung anzugeben, das mit einfachen Mittel eine genaue und zuverlässige Messung des Füllstandes in einem Behälter erlaubt.

Gelöst wird diese Aufgabe durch ein Verfahren zur kapazitiven Füllstandsmessung eines Füllgutes in einem Behälter mit einer Messelektrode und einer Auswerteschaltung mit folgenden Verfahrensschritten Erzeugung eines ersten Spannungssignals mit einer ersten Frequenz f1 Bestimmung des zugehörigen ersten Strombetrags Erzeugung eines zweiten Spannungssignals mit einer zweiten Frequenz f2 Bestimmung des zugehörigen zweiten Strombetrags Bestimmung des kapazitiven Blindwiderstandes aus den beiden Stromwerten und den beiden Frequenzwerten.
Bestimmung der Füllhöhe h des Füllguts über den Blindwiderstand.

Die wesentliche Idee der Erfindung besteht darin, daß die unbekannte Grösse des ohmschen Widerstandes, durch Messung des Strombetrages bei zwei unterschiedlichen Frequenzen eliminiert wird, und dadurch mit einfachen Mitteln der Füllstand des Füllguts im Behälter unabhängig vom ohmschen Widerstand bestimmt werden kann.

Vorteilhafte Weiterentwicklungen der Erfindung sind in den Unteransprüchen angegeben.

Die beiden Frequenzen f1 und f2 werden so gewählt, daß sie sich um einen Faktor zwei unterscheiden.

Nachfolgend ist die Erfindung anhand eines in der Zeichnung dargestellten Ausführungsbeispiels näher erläutert.

Es zeigen:
Fig. 1 Messanordnung zur Bestimmung des Füllstands eines Füllguts in einem Behälter in schematische Darstellung
Fig. 2 Ersatzschaltbild der Anordnung nach Fig. 1 mit Auswerteschaltung in schematischer Darstellung

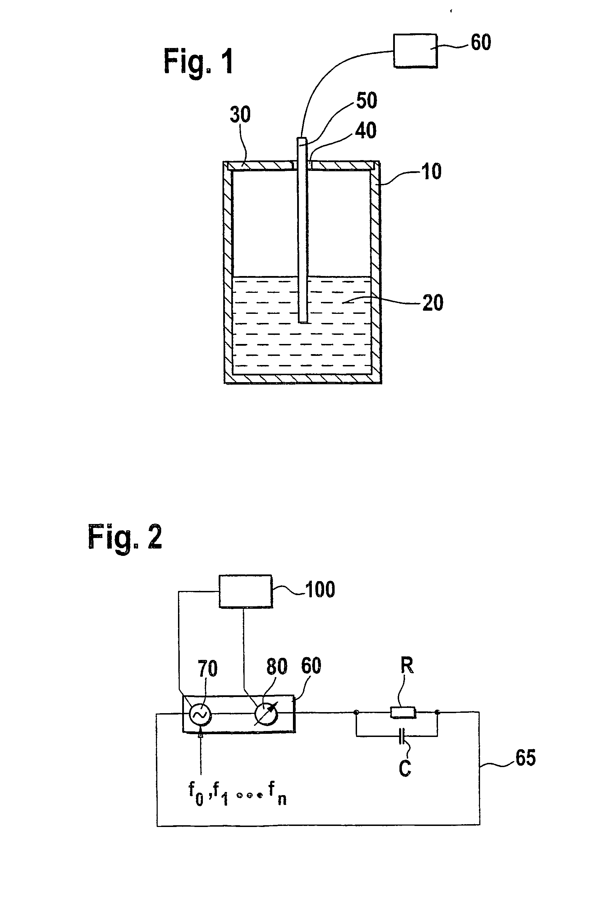

In Fig. 1 ist eine Messanordnung zur Bestimmung des Füllstandes in einem Behälter schematisch dargestellt. Im Behälter 10 befindet sich ein Füllgut 20, dessen Füllhöhe h, d.h. der Füllstand h variabel ist. Der Behälter 10 ist mit einem Deckel 30 verschlossen. Im Deckel 30 ist eine isolierte Durchführung 40 vorgesehen, in der eine Messelektrode 50 gehaltert ist. Die Messelektrode 50, die sich über die gesamte Höhe h des Behälters 10 erstreckt, ist mit einer Messschaltung 60 verbunden.

Fig. 2 zeigt das zu Fig. 1 zugehörige Ersatzschaltbild.

Die Messschaltung 60 besteht im wesentlichen aus einem umschaltbaren Oszillator 70 und einer Strommessschaltung 80, die in Serie geschaltet sind und die mit einer nicht näher dargestellten Auswerteeinheit verbunden sind. Messelektrode 50, Behälter 10 und Füllgut 20 bilden zusammen einen ohmschen Widerstand R und eine parallelgeschaltete Kapazität C.
Widerstand R und Kapazität C sind über den Behälter 10 geerdet. Dies ist durch die Rückleitung 65 angedeutet.
Der Oszillator 70 liefert ein Wechselspannungssignal U mit einer festen Amplitude und einstellbarer Frequenz f.
Geeignete Frequenzen für das erfindungsgemässe Verfahren liegen im Bereich zwischen 10 kHz und 10 MHz.
In vorteilhafter Weise weist der Oszillator 70 einen Frequenzteiler auf, mit der sich die Frequenz f des Wechselspannungssignals U einfach halbieren lässt.

Nachfolgend ist das erfindungsgemässe Verfahren näher erläutert.
Mit Hilfe des Oszillators 70 wird ein Wechselspannungssignal U1 mit der Frequenz f1 erzeugt und der Messelektrode 50 zugeführt. Mit Hilfe der Strommessschaltung 80 wird der Strombetrag l1 bei dieser Frequenz f1 gemessen und dieser Messwert an die Auswerteeinheit weitergeleitet

Anschliessend erfolgt ein Umschalten des Oszillators 70 auf ein Wechselspannungssignal U2 mit der Frequenz f2.
Auch bei dieser Frequenz f2 wird der Strombetrag l2 gemessen und der entsprechende Messwert an die Auswerteeinheit weitergeleitet.
In der Auswerteeinheit wird aus den beiden Stromwerten l1, l2 und den beiden Frequenzen f1, f2 der Blindwiderstand der Messanordnung ermittelt und über den Blindwiderstand die Kapazität und damit die Füllhöhe h des Füllgutes 20 berechnet.

Der ohmsche Widerstand der Messanordnung hat bei dem erfindungsgemässen Verfahren keinen Einfluss auf den Messwert. Auch bei Belagbildung oder bei feuchtem Füllgut ist ein zuverlässiger Messwert ohne aufwendige Messschaltungen gewährleistet.

Über einen Frequenzteiler im Oszillator 70 lassen sich die beiden Frequenzen in einfacher Weise so wählen, daß sie sich um einen Faktor 2 unterscheiden.

## Patentansprüche

1. Verfahren zur kapazitiven Füllstandsmessung eines Füllgutes in einem Behälter mit einer Messelektrode und einer Auswerteschaltung mit folgenden Verfahrensschritten
Erzeugung eines ersten Wechselspannungssignals U1 mit einer ersten Frequenz f1
Bestimmung des zugehörigen ersten Strombetrags l1
Erzeugung eines zweiten Wechselspannungssignals U2 mit einer zweiten Frequenz f2
Bestimmung des zugehörigen zweiten Strombetrags 12
Bestimmung des kapazitiven Blindwiderstandes aus den beiden Stromwerten l1, l2 und den beiden Frequenzwerten f1, f2
Bestimmung der Füllhöhe h des Füllguts über den Blindwiderstand.

2. Verfahren nach Anspruch 1, **dadurch gekennzeichnet, daß** die Frequenzen f1, f2 im Frequenzbereich zwischen 10 kHz und 10 MHz liegen.

3. Verfahren nach einem der vorhergehenden Ansprüche 1 bis 2, **dadurch gekennzeichnet, daß** die beiden Frequenzen f1, f2 sich um einen Faktor im Bereich zwischen 2 und 20 unterscheiden.

4. Verfahren nach Anspruch 3, **dadurch gekennzeichnet, daß** die beiden Frequenzen f1 und f2 sich um den Faktor 2 unterscheiden.

## Claims

1. Method for the capacitive level measurement of a medium in a container with a measuring electrode and an evaluation circuit, where the method comprises the following steps:
A first alternating voltage signal U1 is generated with a first frequency f1.
The associated first current l1 is determined.
A second alternating voltage signal U2 is generated with a second frequency f2.
The associated second current l2 is determined.
The capacitive blind resistance is determined from the two current values l1, l2 and the two frequency values f1, f2.
The level h of the medium is determined via the blind resistance.

2. Method as per Claim 1, **characterized in that** the frequencies f1, f2 are in the frequency range between 10 kHz and 10 MHz.

3. Methods as per one of the previous Claims 1 to 2, **characterized in that** the two frequencies f1 and f2 differ by a factor of between 2 and 20.

4. Method as per Claim 3, **characterized in that** the two frequencies f1 and f2 differ by the factor of 2.

## Revendications

1. Procédé destiné à la mesure capacitive du niveau d'un produit dans un réservoir au moyen d'une électrode de mesure et d'un circuit d'exploitation, avec les étapes de procédé suivantes :
Génération d'un premier signal de tension alternative U1 avec une première fréquence f1 Détermination de la première valeur de courant l1 correspondante
Génération d'un deuxième signal de tension alternative U2 avec une deuxième fréquence f2
Détermination de la deuxième valeur de courant 12 correspondante
Détermination de la réactance capacitive issue des deux valeurs de courant l1, l2 et des deux valeurs de fréquence f1, f2
Détermination de la hauteur de remplissage h du produit par l'intermédiaire de la réactance.

2. Procédé selon la revendication 1, **caractérisé en ce que** les fréquences f1, f2 se situent dans la gamme de fréquences comprise entre 10 kHz et 10 MHz.

3. Procédé selon la revendication 1 à 2, **caractérisé en ce que** les deux fréquences f1, f2 se distinguent d'un facteur situé dans une plage comprise entre 2 et 20.

4. Procédé selon la revendication 3, **caractérisé en ce que** les deux fréquences f1 et f2 se distinguent d'un facteur de 2.
